# FASCICULE DE BREVET EUROPEEN

(11) **EP 3 189 374 B1**
(45) Date de publication et mention de la délivrance du brevet: **01.01.2020**
(21) Numéro de dépôt: 15759675.0
(22) Date de dépôt: 19.08.2015
(51) Int. Cl.: G02F 1/35

(54) **SYSTÈME DE GÉNÉRATION DE FAISCEAU LASER PAR EFFET NON LINÉAIRE À BASE DE CAVITÉ MICROCHIP RÉSONANTE**
AUF EINEM RESONANTEN MIKROCHIP-HOHLRAUM BASIERTES SYSTEM ZUR ERZEUGUNG EINES LASERSTRAHLS ÜBER EINEN NICHTLINEAREN EFFEKT
A RESONANT-MICROCHIP-CAVITY-BASED SYSTEM FOR GENERATING A LASER BEAM VIA A NON-LINEAR EFFECT

(30) Priorité: 05.09.2014 FR 1458367
(43) Date de publication de la demande: 12.07.2017
(73) Titulaire: Oxxius, 22300 Lannion (FR)
(72) Inventeur: GEORGES, Thierry, 22700 Perros Guirec (FR); LANDRU, Nicolas, 22560 Pleumeur Bodou (FR)
(74) Mandataire: IPAZ
(86) Numéro de dépôt international: PCT/EP2015/069016
(87) Numéro de publication internationale: WO 2016/034416

(56) Documents cités:
- EP-A2- 0 503 929
- EP-A2- 0 798 824
- EP-A2- 0 857 997
- WO-A1-00/71342
- US-B1- 6 654 392
- JUWILER I ET AL: "EFFICIENT QUASI-PHASE-MATCHED FREQUENCY DOUBLING WITH PHASE COMPENSATION BY A WEDGED CRYSTAL IN A STANDING-WAVE EXTERNAL CAVITY", OPTICS LETTERS, OPTICAL SOCIETY OF AMERICA, US, vol. 24, no. 17, 1 septembre 1999 (1999-09-01), pages 1236-1238, XP000873629, ISSN: 0146-9592
- Neuhaus Rudolf ET AL: "TOPTICA Photonics AG | Lochhamer Schlag 19 | 82166 Graefelfing / Munich | Germany Diode Laser Control Electronics Diode Laser Locking and Linewidth Narrowing", , 30 septembre 2009 (2009-09-30), XP055200256, Extrait de l'Internet: URL:http://www.toptica.com/fileadmin/user_ upload/products/Photonicals/Spectroscopy_C ells/toptica_AP_1012_laser_locking_2009_09 .pdf [extrait le 2015-07-06]

## Description

La présente invention concerne la génération de nouvelles longueurs d'onde par effets non linéaires, en particulier pour des lasers continus de puissance faible ou moyenne (<5W typiquement).

Les processus non linéaires sont des moyens très pratiques pour engendrer des longueurs d'onde peu accessibles à partir de longueurs d'onde plus communes. On connaît des processus de génération d'ordre 2 tels que la génération de second harmonique ou la somme et la différence de fréquences. On connaît également des processus de génération d'ordre 3 tels que par exemple la diffusion Raman stimulée, ou autres.

Par exemple, il est assez aisé de réaliser des lasers à 1064 nm, les matériaux et les pompes optiques nécessaires pour cela étant connus de l'homme du métier et disponibles pour celui-ci. Par génération de second harmonique, il est possible d'obtenir une émission à 532 nm, puis une émission à 266nm par un second étage de génération de second harmonique ou une émission à 355 nm par somme de fréquences entre l'onde fondamentale (1064 nm) et l'onde doublée (532 nm).

Pour tout ensemble laser, il est entendu que son efficacité, représentant la puissance de sortie en fonction de la puissance de pompe, doit être optimisée.

L'efficacité des processus non linéaires dépend cependant de l'intensité des signaux optiques. Elle est très importante (souvent supérieure à 50%) avec des émissions laser provenant de lasers déclenchés dont les puissances crête dépassent en général le kW. De nombreux dispositifs commerciaux existent depuis longtemps.

Cette efficacité est en générale faible avec des cristaux non linéaires conventionnels et des puissances optiques de l'ordre de quelques Watts ou moins.

A titre d'exemple, en utilisant l'un des matériaux les plus efficaces pour la génération de second harmonique à 1064 nm, le KTP, l'efficacité de conversion atteint à peine 0.02% avec une puissance d'1W à 1064 nm focalisée sur un rayon de 50µm au centre d'un KTP de 5 mm de long. Il en résulte une émission à 532 nm de 200 µW. Cette efficacité est encore plus faible pour la génération de second harmonique d'une émission à 532 nm dans le BBO pour produire une émission dans l'UV profond (266 nm).

Pour augmenter l'efficacité, on peut envisager de réduire la taille du faisceau en focalisant plus. Mais cela réduit la longueur de cristal non linéaire utile, du fait de la forte divergence du faisceau.

Des travaux récents ont permis d'améliorer l'efficacité de certains cristaux non linéaires. Le quasi-accord de phase développé sur le Niobate de Lithium (ppLN) ou le KTP (ppKTP) permet d'atteindre des efficacités de conversion de l'ordre de 1% pour 1W de signal à 1064 nm. Mais ces matériaux ne sont pas par exemple disponibles dans l'UV. Le ppSLT existe pour la somme de fréquences entre 1064nm et 532nm, mais son efficacité n'est pas très élevée.

La méthode la plus efficace pour exacerber les effets non linéaires est d'inclure le cristal non linéaire à l'intérieur d'une cavité résonante à la longueur d'onde de l'onde fondamentale.

C'est le cas lorsque le cristal non linéaire est inclus dans la cavité laser. Les lasers à solide émettant à 532 nm ou à 561 nm sont un exemple de l'inclusion d'un cristal non linéaire dans la cavité laser. Par exemple le Nd :YAG pompé à 808 nm est l'amplificateur à 1064 nm ou 1123 nm.

Les lasers à Argon (gazeux) doublés en intracavité, émettant par exemple à 244 nm, en sont un autre exemple.

Lorsqu'il n'est pas possible d'insérer le cristal non linéaire dans la cavité laser, et si le laser est monofréquence, il est possible d'injecter l'émission laser dans une cavité externe et d'ajuster la longueur optique de la cavité externe de manière à la rendre résonante avec l'émission laser. A la résonance, la puissance de l'onde fondamentale est typiquement amplifiée d'un facteur S (surtension de la cavité). La largeur en phase de la résonance est de l'ordre de 2π/S. Dans l'art antérieur, c'est la manière conventionnelle de réaliser une source continue à 266 nm.

Des finesses de l'ordre de 30 à 100 sont usuellement employées dans les cavités externes non linéaires afin d'atteindre des rendements de conversion de 10% à plus de 30%.

Les cavités externes sont usuellement réalisées par l'assemblage et l'alignement d'au moins deux miroirs (cavité Fabry-Pérot) et souvent quatre (dans les cavités en forme de nœud de papillon, « bow tie ring cavity » en anglais). Dans de tels systèmes de l'art antérieur, tout déplacement mécanique dû par exemple à une vibration mécanique induit une modification de la phase de l'onde optique. Un déplacement δ de l'un des miroirs d'une cavité Fabry-Pérot induit une variation de phase de 4πδ/λ, qui doit être bien inférieure à 2π/S si l'on souhaite éviter les fluctuations de puissance de l'onde fondamentale dans la cavité (et donc de l'onde engendrée par les effets non linéaires). Le bon fonctionnement de la cavité externe se traduit donc par δ<<λ/2S. Pour une longueur d'onde de 500 nm et une finesse de 50, les fluctuations mécaniques doivent vérifier δ<<5 nm ! Pour une cavité de 50 mm de long, cela revient à une stabilité relative de mieux que 10⁻⁷. Cette stabilité mécanique est hors de portée des systèmes mécaniques traditionnels.

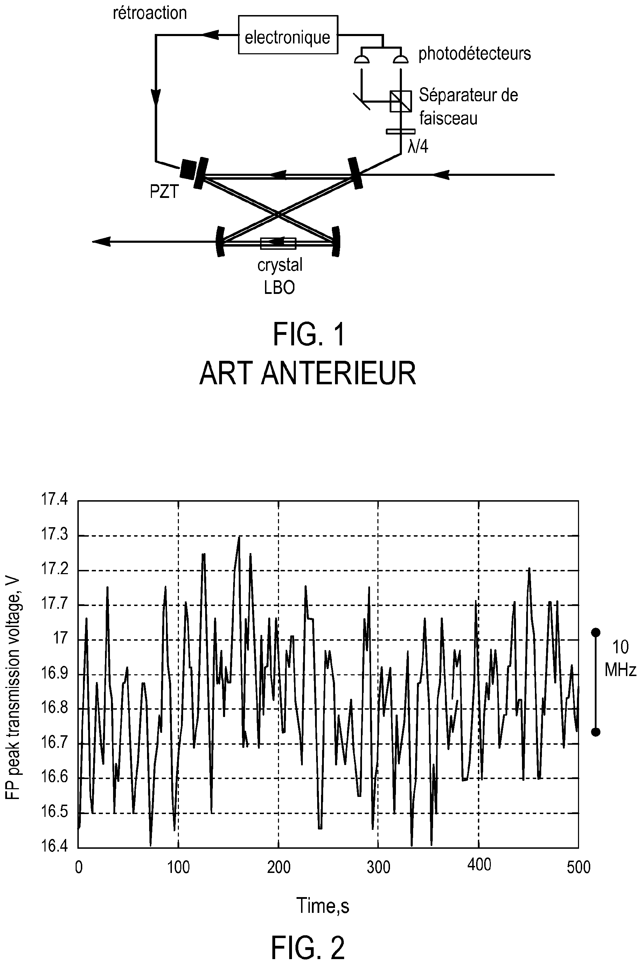

Sur la figure 1, on voit un système de génération de faisceau laser par effets non linéaires selon l'art antérieur. On distingue une cavité en nœud de papillon comprenant quatre miroirs et un cristal LBO. On asservit la longueur de la cavité à la puissance de la pompe, le faisceau laser incident. Pour ce faire, on prélève une partie du faisceau incident par réflexion sur un premier miroir. Le faisceau prélevé est ensuite détecté par un ou plusieurs photodétecteurs via une lame quart d'onde et éventuellement un séparateur de faisceaux. Les photodétecteurs alimentent une unité de traitement qui génère un signal de commande de déplacement d'un second miroir au moyen d'un module piézo-électrique de façon à modifier la longueur de la cavité.

Dans l'art antérieur, les cavités utilisées pour la génération de second harmonique sont donc asservies électro-mécaniquement, en général par effet piezo-électrique et par une méthode de génération de signal d'erreur comme celle de Hänsch-Couillaud (telle qu'illustrée sur la figure 1) ou celle de Pond-Drever-Hall.

Cependant, les cavités externes ont des limitations technologiques.

Les actuateurs piézo-électriques utilisés nécessitent des tensions de l'ordre du kV. L'électronique associée devient complexe et chère dès lors que la bande passante dépasse les kHz. La tension maximale de l'actuateur piézo-électrique correspond à une intensité maximale de la vibration mécanique que l'on peut corriger. La fréquence maximale correspond à la fréquence maximale de la vibration que l'on peut corriger. Au-delà, le système d'asservissement décroche.

On connaît du document EP 503 929 et de la publication W. Kozlovsky et al., « Efficient Second Harmonie Generation of a Diode Laser Pumped CW Nd :YAG laser using monolithic MgO :LiNbO3 external resonant cavities", IEEE JQE vol 24, p913*,* que lorsque la source fondamentale est insensible aux vibrations (par exemple avec un laser monolithique) et la cavité externe est également monolithique, il est possible d'asservir « thermiquement » la cavité externe sur la fréquence de la source fondamentale. Cette solution est élégante et facile à mettre en œuvre si l'on sait réaliser la cavité externe et la source.

Toutefois, les cavités externes monolithiques présentent elles aussi des limitations.

Premièrement, les cavités externes sont fermées par deux miroirs réfléchissants et nécessitent au moins un élément focalisant. Dans une cavité externe monolithique, les miroirs sont déposés directement sur le cristal non linéaire et l'élément focalisant est obtenu avec un polissage avec une courbure. De nombreux cristaux non linéaires et en particulier ceux qui sont efficaces dans l'UV comme le BBO ont des dilatations thermiques trop importantes pour pouvoir y déposer des miroirs diélectriques. D'autre part, leur polissage est souvent difficile (hygroscopie,...) et rend le polissage avec rayon de courbure difficile à réaliser. Il est alors cher et de mauvaise qualité. Il est donc souvent impossible ou pas économique de réaliser une cavité monolithique externe.

Deuxièmement, de nombreux cristaux non linéaires ont une sensitivité à la température élevée. Cela nécessite donc un contrôle en température plus précis.

Troisièmement, lorsque l'acceptance en température du cristal non linéaire est faible, il peut ne pas être possible de trouver une température qui rend la cavité résonnante et qui se trouve dans la plage d'accord de phase du cristal non linéaire.

Quatrièmement, de nombreux cristaux nonlinéaires présentent un walk-off important, limitant l'efficacité de conversion non linéaire et dégradant la qualité du faisceau converti.

Finalement, l'asservissement en température étant naturellement lent, il est difficile d'éviter des oscillations de puissance en sortie de la cavité externe.

La présente invention a pour objet de pallier les inconvénients précités en proposant une cavité externe de grande efficacité. Un autre but de l'invention est de permettre une génération de longueurs d'ondes peu usuelles, notamment dans l'UV pour un laser continu de faible puissance.

On atteint au moins des objectifs précités avec un système de génération d'un faisceau laser par effets non linéaires comprenant :
- une source laser continue monofréquence pour générer une onde fondamentale, et
- une cavité externe résonante recevant cette onde fondamentale, dite cavité microchip.

Selon l'invention, la cavité microchip est composite dans la mesure où cette cavité microchip est un assemblage solidaire de plusieurs matériaux comprenant :
- au moins un cristal non linéaire,
- un miroir d'entrée,
- un miroir concave déposé sur un matériau fixé au cristal non linéaire ; le matériau sur lequel est déposé le miroir concave est différent du matériau constitutif du cristal non linéaire, et
- un premier module thermoélectrique pour contrôler la température du cristal non linéaire et au moins un second module thermoélectrique pour contrôler au moins la température du matériau sur lequel est déposé le miroir concave.

La source laser continue monofréquence génère une onde fondamentale qui est injectée dans la cavité externe, cette dernière étant résonante à la fréquence de l'onde fondamentale entre les deux miroirs.

La présente invention ainsi définie permet la conversion de fréquence d'une source laser par une cavité externe microchip. La source laser peut être une diode laser, éventuellement amplifiée, un laser à solide microchip pompé par diode ou tout type de laser suffisamment stable en fréquence et peu sensible aux vibrations mécaniques.

Avec le système selon l'invention, il est désormais possible, avec les sources lasers continus actuels essentiellement dans l'IR, d'utiliser de nombreux cristaux non linéaires et en particulier ceux qui sont efficaces dans l'UV tels que le BBO, le LBO ou le BiBO, qui ont des dilatations thermiques trop importantes pour pouvoir y déposer des miroirs diélectriques ; au moins le miroir concave peut avantageusement être déposé sur un matériau différent de celui du cristal non linéaire.

Selon une caractéristique avantageuse de l'invention, au moins le matériau constitutif du miroir concave est contrôlé en température de façon à modifier optiquement la cavité et à obtenir la résonance quelque soit la configuration.

Par ailleurs, les matériaux des miroirs d'entrée et de sortie peuvent être en verre ou en cristal, avec un coefficient d'expansion thermique inférieur à celui du matériau constitutif du cristal non linéaire et une aptitude au polissage supérieure à celle du matériau constitutif du cristal non linéaire. Ces deux caractéristiques sont de préférences mises en œuvre ensemble, toutefois en fonction des objectifs voulus et des matériaux en présence, chacune peut être mise en œuvre indépendamment l'autre. Avec un matériau que l'on peut facilement polir, on peut facilement déposer les miroirs notamment avec courbure.

Avec au moins deux types de cristaux dans la cavité et au moins deux contrôles en températures différents, il est possible d'ajuster précisément la température du cristal non linéaire pour atteindre l'accord de phase et la température du deuxième cristal ou verre pour atteindre la résonance de la cavité. L'assemblage réduit en général également la sensibilité de la résonance à la température du cristal non linéaire.

Lorsqu'on utilise la méthode d'accord de phase par biréfringence, ce qui est le cas le plus courant pour la génération d'UV par exemple, le cristal non linéaire est coupé hors des axes cristallographiques et présente un décalage spatial (« walk-off » en anglais) pour au moins un état de polarisation. Il est connu de compenser cet effet en coupant le cristal en plusieurs morceaux selon la longueur et en faisant tourner de 180°, autour de l'axe de propagation du signal, deux éléments consécutifs. Une fois le cristal découpé et tourné, il est à nouveau rassemblé. Le cristal non linéaire tel que défini dans la présente invention peut être un tel cristal coupé, tourné puis rassemblé. Il est également considéré comme un assemblage microchip.

Dans une cavité Fabry-Pérot, l'onde convertie est émise dans les deux directions. Il est d'usage de réfléchir l'une des émissions sur l'un des deux miroirs pour additionner les deux faisceaux. Mais cette addition se fait en amplitude et donc peut se faire en phase ou hors phase. Si le miroir se trouve immédiatement à la sortie du cristal non linéaire, l'addition se fait automatiquement en phase. Sinon, selon l'invention, on peut accorder la température du cristal ou du verre portant ce miroir afin d'ajuster la phase.

En complément notamment de ce qui précède, le système selon l'invention peut avantageusement comprendre une unité de traitement configurée pour asservir la température du cristal non linéaire et la température au moins du matériau sur lequel est déposé le miroir concave à la fréquence de la source laser. De préférence, l'unité de traitement peut être configurée pour réaliser l'asservissement en température uniquement sur au moins un flanc de la courbe de résonance. Cela permet notamment de régler un problème dû à l'impossibilité d'asservir au sommet de la courbe. En effet, lorsqu'il y a une absorption, la courbe de résonance du Fabry Pérot peut devenir dissymétrique et il est possible que l'asservissement décroche au sommet. Toutefois, lorsqu'il n'y a pas d'hystérésis, il est possible de réaliser un asservissement au sommet.

En complément notamment d'une ou plusieurs caractéristiques qui précèdent et dans l'objectif de stabiliser la puissance de sortie, l'unité de traitement peut en outre être configurée pour réaliser un asservissement utilisant des phénomènes physiques plus rapides que la température des cristaux. Par exemple, lorsque le cristal non linéaire est un cristal électro-optique, l'unité de traitement peut être configurée pour réaliser un asservissement électro-optique en appliquant directement une tension sur le cristal non linéaire. Une telle application de tension sur un cristal électro-optique (sensible à l'effet Pockels) modifie la phase de la cavité de manière quasiment instantanée.

Toujours dans le même objectif, l'unité de traitement peut aussi être configurée pour réaliser un asservissement de la phase de l'onde fondamentale dans la cavité externe en modifiant la fréquence de la source laser continue monofréquence. Cette fréquence peut être modifiée par différents moyens comme par exemple en modifiant le courant d'une pompe optique alimentant la source laser continue monofréquence ou en modifiant le courant d'un laser semiconducteur utilisé en tant que ladite source laser continue monofréqunce.

La variation du courant de la pompe optique ou du laser semiconducteur permet de faire varier rapidement la fréquence de l'onde fondamentale et donc la phase de la cavité externe (qui dépend de la fréquence).

D'autres types d'asservissement rapide peuvent être utilisés. En particulier, tout effet physique modifiant la fréquence du laser d'émission ou la phase de l'onde fondamentale dans la cavité externe et qui soit plus rapide que la thermique (quelques Hz à quelques centaines de Hz sont suffisants) peut être combiné avec l'asservissement en température et stabiliser la puissance de sortie.

Avec l'invention, on envisage de pouvoir ainsi combiner un asservissement en température, pas assez stable, avec un asservissement rapide de faible intensité.

Avantageusement, la cavité microchip peut être une cavité externe formant un interféromètre de Fabry-Pérot, une cavité externe en anneau, ou une cavité externe formant un interféromètre dont la réflectivité est maximum lors de la résonance. D'autres configurations de cavité peuvent être mises en œuvre.

En complément notamment d'une ou de plusieurs caractéristiques qui précèdent, le matériau sur lequel est déposé le miroir concave comprend de la silice ou de la silice fondue (dioxyde de silicium amorphe synthétique, également nommée silice UV) ou du saphir. Ces matériaux sont faciles à polir et présentent une expansion thermique et des coefficients thermo-optiques (dn/dT) assez faibles.

Selon un mode de mise en œuvre avantageux de l'invention, le cristal non linéaire et le matériau sur lequel est déposé le miroir concave sont assemblés par adhérence moléculaire ou par collage selon un procédé sol-gel, ou par tout autre moyen permettant d'obtenir un assemblage solidaire des différents cristaux ou verres.

Selon l'invention, on peut prévoir une configuration où le cristal non linéaire est en forme de parallélépipède comprenant deux faces opposées auxquelles les deux miroirs d'entrée et de sortie sont respectivement fixés, la section de chacun des deux miroirs étant supérieure ou égale à la section du cristal non linéaire de sorte que lesdites deux faces opposées du cristal non linéaire sont complètement recouvertes respectivement par les deux miroirs.

On peut par ailleurs prévoir une variante où le cristal non linéaire est en forme de parallélépipède comprenant deux faces opposées auxquelles les deux miroirs d'entrée et de sortie sont respectivement fixés, la section du miroir d'entrée étant inférieure à la section du cristal non linéaire de sorte que la face d'entrée du cristal non linéaire n'est pas complètement recouverte par le miroir d'entrée.

Selon l'invention, le miroir d'entrée peut être déposé directement sur le matériau constitutif du cristal non linéaire ou bien sur un autre matériau différent de celui du cristal non linéaire. Dans ce dernier cas les éléments sont assemblés par adhérence moléculaire ou par collage selon un procédé sol-gel.

D'autres avantages et caractéristiques de l'invention apparaîtront à l'examen de la description détaillée d'un mode de mise en œuvre nullement limitatif, et des dessins annexés, sur lesquels :
- La figure 1 est une vue schématique d'une cavité externe résonante selon l'art antérieur,
- La figure 2 est une courbe illustrant la mesure de fluctuation de fréquence d'un laser microchip émettant à 561 nm par un interféromètre de Fabry-Pérot,
- La figure 3 est une vue schématique d'un système de conversion non linéaire comprenant une cavité externe résonante composite selon l'invention,
- La figure 4 est une courbe illustrant la puissance mesurée par photodiode (en V) en sortie d'une cavité externe microchip selon l'invention formée d'un cristal de BBO et de miroirs déposés sur de la silice,
- La figure 5 est une courbe illustrant la puissance mesurée par photodiode (en V) en sortie de la même cavité externe microchip que sur la figure précédente avec un asservissement électro-optique sur le BBO, et
- La figure 6 est une schématique d'une cavité externe selon l'invention sous la configuration d'un interféromètre dont la réflectivité est maximale lors de la résonnance.

Bien que l'invention n'y soit pas limitée, on va maintenant décrire des exemples de cavité externe linéaire formant interféromètre de Fabry-Pérot. Toute cavité microchip en anneau ou sous un autre type d'interféromètre est évidemment possible. Ces cavités sont décrites de telle sorte qu'elles mettent en œuvre l'effet non linéaire de doublement de fréquence, mais évidemment tout autre effet nécessitant la résonance de la cavité externe peut être appliqué : somme ou différence de fréquences, oscillateur paramétrique (OPO), laser Raman,...

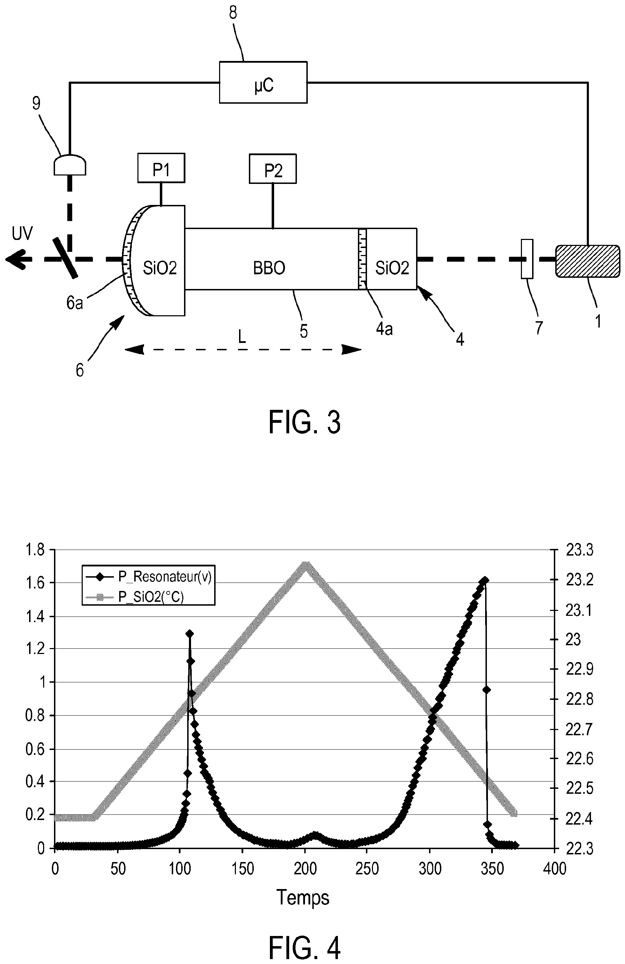

Un premier exemple de réalisation est décrit sur la figure 3 pour la réalisation d'un système laser émettant à 280.5nm. La source laser continue 1 émet à 561 nm et produisant l'onde fondamentale 2. Ce laser continu 1 est formé par l'assemblage d'un cristal amplificateur, le Nd :YAG, d'un cristal de quartz, d'un polariseur et d'un cristal doubleur. Les oscillations de fréquence de ce laser comme on le voit sur la figure 2 montrent que les variations d'amplitude sont de l'ordre de 20 MHz et lentes (période > 5s). Cela confirme l'insensibilité de ce type de sources aux vibrations.

On injecte cette onde fondamentale 2 dans une cavité externe microchip 3 formant interféromètre de Fabry-Pérot selon l'invention. La cavité est réalisée par l'assemblage par adhérence moléculaire d'un matériau 4 qui est un substrat en silice, d'un cristal non linéaire de BBO de 10 mm de long, coupé pour l'accord de phase de type I entre l'onde fondamentale à 561 nm et l'onde doublée à 280.5 nm. Un miroir d'entrée 4a est déposé sur le substrat 4 de silice sur une extrémité de ce substrat directement en contact avec le cristal non linéaire, ce qui a permis sa conception plus aisément que s'il avait fallut le déposer directement sur le BBO (ce qui reste toutefois un mode de réalisation envisageable pour certaines applications). La silice a été traitée pour avoir un effet réflecteur de 93% pour l'onde à 561 nm et un effet réflecteur >95% pour l'onde à 280.5 nm.

La fermeture de la cavité est obtenue grâce à un miroir concave 6 de sortie en silice de réflectivité maximale à 561nm et minimale à 280 nm. Le rayon de courbure est de 100 mm. Ce miroir concave 6a est disposé sur une extrémité du matériau 6 qui est en substrat en silice. Le matériau 6 est un substrat avec une face d'entrée plane et une face de sortie courbée du côté opposé au cristal non linéaire, le miroir 6a étant déposé sur la face courbée vers l'extérieur. On constate que la cavité externe est composite puisque les deux miroirs sont déposés sur des substrats de silice, matériau différent du cristal non linéaire en BBO.

Le premier miroir est au contact du BBO, de sorte que la cavité débute directement sur le BBO. La longueur L de la cavité résonante est de 20mm. Un isolateur optique 7 empêche l'onde réfléchie par la cavité Fabry-Pérot de retourner dans le laser continu 1 et de le déstabiliser.

Le système est conçu de façon à réaliser un double asservissement : un asservissement en température via deux éléments Peltier P1 pour le miroir 6a et P2 pour le cristal non linéaire commandés par une unité de traitement 8. Le second asservissement est de type électro-optique. Pour ce faire, l'unité de traitement 8 est connectée au laser continu 1 et reçoit de la part d'un photodétecteur rapide 9 un signal représentatif de l'onde UV de sortie à 280.5nm.

L'unité de traitement 8 comprend au moins par exemple un microcontrôleur et des composants matériels et logiciels conventionnels lui permettant de s'interfacer avec les différents composants du système et de mettre des algorithmes d'asservissement.

Avec 300mW à 561 nm, une puissance de sortie de plus de 20mW à 280.5 nm a été obtenue.

Les courbes sur la figure 4 illustrent la puissance mesurée par photodiode (en V) en sortie d'une cavité externe microchip formée le cristal de BBO et de miroirs déposés sur de la silice. La température de la silice est d'abord augmentée de 22.4°C à 23.25°C puis diminuée jusqu'à la température initiale. On constate que la courbe de résonance de la cavité externe est dissymétrique à cause d'une légère absorption et présente une hystérésis différentiant la montée et la descente en température.

Ces effets empêchent d'asservir au sommet de la courbe. On peut alors prévoir d'asservir sur le flanc de la courbe. L'asservissement fonctionne (il n'y a pas de décrochage) mais on constate notamment que la puissance n'est pas très stable avec +/- 10% de variations. L'asservissement thermique nécessite donc un asservissement sur le flanc de la résonance et n'est donc pas suffisamment stable. On peut alors avantageusement rajouter un système supplémentaire pour stabiliser la puissance de sortie.

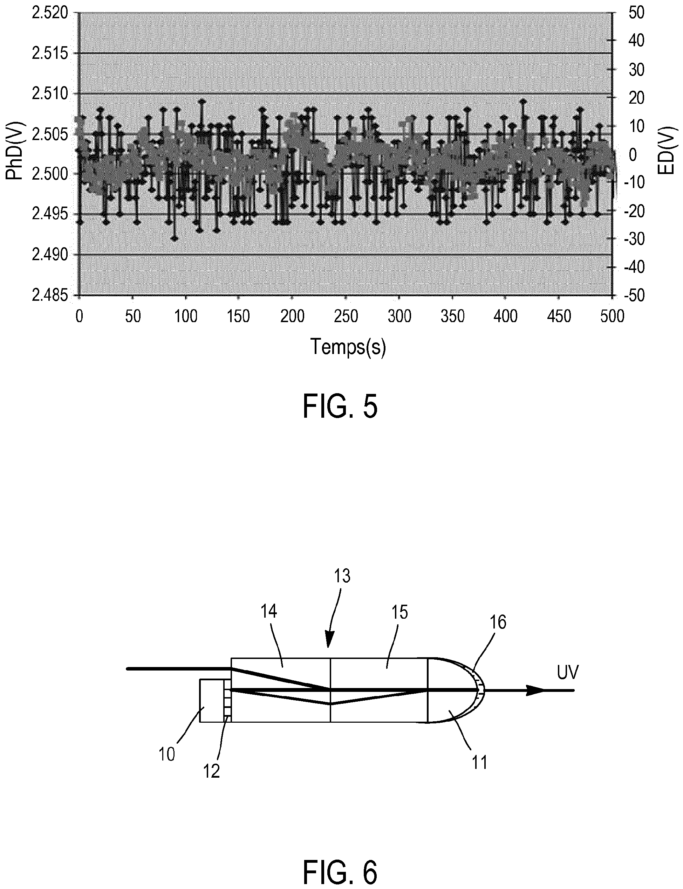

Pour la stabilisation de la puissance de sortie, on peut prévoir d'utiliser l'effet électro-optique du cristal de BBO. Un signal inférieur à 40V crête a suffit à ramener les fluctuations de puissance à moins de 0.2% rms. Sur la figure 5, les courbes illustrent la puissance mesurée par photodiode (en V) en sortie de la même cavité externe microchip avec un asservissement électro-optique sur le BBO. On montre également que la variation de courant de pompe d'une pompe optique du laser continu 1 émettant à 561 nm induit une variation de fréquence suffisamment rapide pour atteindre le même résultat. Ces deux exemples ne sont évidemment pas exhaustifs.

Il peut être avantageux selon l'invention de réaliser un interféromètre dont la réflectivité est maximale lors de la résonance. Cet interféromètre peut ainsi accorder une diode a priori multimode sur un mode résonant. Cela permet de réaliser de manière simple notamment une source UV profond à 244 nm à partir d'une diode GaN à 488 nm ou à 225nm à partir d'une diode GaN à 450 nm.

Un tel interféromètre peut être réalisé de la manière illustrée sur la figure 6 pour le cas d'une cavité pour le doublage de fréquence de 488nm vers 244nm. On distingue un miroir plan 12 en entrée, ce miroir d'entrée ne couvrant pas entièrement le cristal non linéaire 13 et réfléchissant à 488nm et 244nm. On distingue également un miroir courbe 16 en sortie, réfléchissant à 488nm et transmettant à 244nm. Le substrat 11 sur lequel est déposé le miroir concave 16, ainsi qu'éventuellement le substrat 10 sur lequel est déposé le miroir plan 12, est constitué d'un matériau différent de celui du cristal non linéaire. Le cristal non linéaire, en BBO, est en deux morceaux 14 et 15 tournés selon l'axe de propagation d'un angle compris entre 170 et 179.5° ou 180.5° et 190°. La valeur proche de 180° assure la compensation du décalage spatial lié à la propagation sur l'axe extraordinaire (e) (« walk-off » en anglais). La valeur légèrement différente de 180° couple faiblement l'onde extraordinaire (e) du premier cristal de BBO avec l'onde ordinaire (o) du second cristal. L'accord de phase est obtenu entre l'onde ordinaire (o) à 488nm et l'onde extraordinaire (e) à 244nm.

L'entrée dans la cavité externe microchip se fait par l'onde (e). La réflectivité est maximale lorsque la cavité externe est résonante.

La présente invention est donc relative à un système très efficace de conversion non linéaire (SHG, SFG,DFG, Raman, oscillation paramétrique,...) d'une source continue monofréquence dans une cavité externe résonante et asservie sur la fréquence de la source.

Bien sûr, l'invention n'est pas limitée aux exemples qui viennent d'être décrits et de nombreux aménagements peuvent être apportés à ces exemples sans sortir du cadre de l'invention. La source laser continue peut être une diode laser monofréquence (DFB ou DBR), potentiellement amplifiée par un amplificateur externe (à fibre ou non). Elle peut-être une diode GaN monofréquence

L'effet non linéaire mis en œuvre peut être de façon non limitative l'un de ceux décrits ci-dessous :
- doublement de fréquence,
- Somme de fréquences : la première fréquence résonante dans la cavité externe selon l'invention ; la seconde fréquence (non résonante) traversant la cavité externe, cette seconde fréquence provenant d'un oscillateur laser pouvant englober la cavité externe,...
- Oscillateur/Amplificateur paramétrique : la cavité externe étant également une cavité aux longueurs d'onde paramétriques ou la cavité paramétrique englobant la cavité externe,
- Oscillateur/amplificateur Raman.

## Revendications

1. Système de génération d'un faisceau laser par effets non linéaires comprenant :
- une source laser continue monofréquence pour générer une onde fondamentale,
- une cavité externe résonante recevant cette onde fondamentale, dite cavité microchip,
**caractérisé en ce que** ladite cavité microchip est composite dans la mesure où cette cavité microchip est un assemblage solidaire de plusieurs matériaux comprenant :
- au moins un cristal non linéaire (5),
- un miroir d'entrée (4a),
- un miroir concave (6a) déposé sur un matériau (6) fixé au cristal non linéaire ; le matériau sur lequel est déposé le miroir concave est différent du matériau constitutif du cristal non linéaire,
- un premier module thermoélectrique (P2) pour contrôler la température du cristal non linéaire et au moins un second module thermoélectrique (P1) pour contrôler au moins la température du matériau sur lequel est déposé le miroir concave.

2. Système selon la revendication 1, **caractérisé en ce qu'**il comprend une unité de traitement configurée pour asservir la température du cristal non linéaire et la température au moins du matériau sur lequel est déposé le miroir concave à la fréquence de la source laser.

3. Système selon la revendication 2, **caractérisé en ce que** l'unité de traitement est configurée pour réaliser l'asservissement en température uniquement sur au moins un flanc de la courbe de résonance.

4. Système selon l'une quelconque des revendications précédentes, **caractérisé en ce qu'**il comprend une unité de traitement configurée pour réaliser un asservissement utilisant tout effet physique modifiant la fréquence du faisceau laser d'émission ou la phase de l'onde fondamentale dans la cavité externe et qui soit plus rapide que la thermique.

5. Système selon l'une quelconque des revendications précédentes, **caractérisé en ce que** l'unité de traitement est configurée pour réaliser un asservissement de la phase de l'onde fondamentale dans la cavité externe en modifiant la fréquence de la source laser continue monofréquence .

6. Système selon l'une quelconque des revendications précédentes, **caractérisé en ce que** lorsque le cristal non linéaire est un cristal électro-optique, l'unité de traitement est configurée pour réaliser un asservissement électro-optique en appliquant directement une tension sur le cristal non linéaire.

7. Système selon l'une quelconque des revendications précédentes, **caractérisé en ce que** la cavité microchip est une cavité externe formant un interféromètre de Fabry-Pérot.

8. Système selon l'une quelconque des revendications 1 à 6, **caractérisé en ce que** la cavité microchip est une cavité externe en anneau.

9. Système selon l'une quelconque des revendications 1 à 6, **caractérisé en ce que** la cavité microchip est une cavité externe formant un interféromètre dont la réflectivité est maximum lors de la résonance.

10. Système selon l'une quelconque des revendications précédentes, **caractérisé en ce que** le matériau sur lequel est déposé le miroir concave est en verre ou en cristal, avec un coefficient d'expansion thermique et des coefficients thermo-optiques respectivement inférieurs à ceux du matériau constitutif du cristal non linéaire et une hygroscopie inférieure à celle du matériau constitutif du cristal non linéaire.

11. Système selon l'une quelconque des revendications précédentes, **caractérisé en ce que** le matériau sur lequel est déposé le miroir concave comprend de la silice ou de la silice fondue ou du saphir.

12. Système selon l'une quelconque des revendications précédentes, **caractérisé en ce que** le cristal non linéaire et le matériau sur lequel est déposé le miroir concave sont assemblés par adhérence moléculaire ou par collage selon un procédé sol-gel.

13. Système selon l'une quelconque des revendications précédentes, **caractérisé en ce que** le miroir d'entrée est déposé directement sur le matériau constitutif du cristal non linéaire ou bien sur un autre matériau différent de celui du cristal non linéaire.

## Patentansprüche

1. System zur Erzeugung eines Laserstrahls durch nichtlineare Effekte, welches
- eine kontinuierliche monochromatische Laserquelle zur Erzeugung einer Grundwelle sowie
- einen externen resonanten Hohlraum, im Folgenden als Mikrochip-Hohlraum bezeichnet, zur Aufnahme der Grundwelle aufweist,
**dadurch gekennzeichnet, dass** der Mikrochip-Hohlraum ein Verbund ist in dem Sinne, dass der Mikrochip-Hohlraum eine feste Verbindung aus verschiedenen Werkstoffen ist, umfassend:
- zumindest einen nichtlinearen Kristall (5);
- einen Eingangsspiegel (4a);
- einen Hohlspiegel (6a), aufliegend auf einem am nichtlinearen Kristall angebrachten Werkstoff (6), wobei der Werkstoff (6) sich von dem Werkstoff unterscheidet, aus dem der nichtlineare Kristall besteht;
- ein erstes thermoelektrisches Modul (P2) zum Steuern der Temperatur des nichtlinearen Kristalls und zumindest ein zweites thermoelektrisches Modul (P1) zum Steuern von zumindest der Temperatur des Werkstoffs, auf dem der Hohlspiegel aufliegt.

2. System nach Anspruch 1, **dadurch gekennzeichnet, dass** es eine Verarbeitungseinheit zum Regeln der Temperatur des nichtlinearen Kristalls und der Temperatur zumindest des Werkstoffs, auf dem der für die Frequenz der Laserquelle konkave Hohlspiegel aufliegt, aufweist.

3. System nach Anspruch 2, **dadurch gekennzeichnet, dass** die Verarbeitungseinheit dafür eingerichtet ist, das Regeln der Temperatur auf zumindest einer Flanke der Resonanzkurve durchzuführen.

4. System nach einem der vorhergehenden Ansprüche, **dadurch gekennzeichnet, dass** es eine Verarbeitungseinheit derart eingerichtet umfasst, dass die damit durchführbare Regelung sämtliche physikalischen Effekte ausnutzt, die die Frequenz des emittierten Laserstrahls oder die Phase der Grundwelle im externen Hohlraum modifizieren und dabei schneller ablaufen als thermische Effekte.

5. System nach einem der vorangehenden Ansprüche, **dadurch gekennzeichnet, dass** die Verarbeitungseinheit dergestalt eingerichtet ist, dass das Regeln der Phase der Grundwelle im externen Hohlraum durch Modifizierung der Frequenz der kontinuierlichen monochromatischen Laserquelle erfolgt.

6. System nach einem der vorangehenden Ansprüche, **dadurch gekennzeichnet, dass**, sofern es sich bei dem nichtlinearen Kristall um einen elektro-optischen Kristall handelt, die Verarbeitungseinheit dergestalt eingerichtet ist, ein elektrooptisches Regeln durch direktes Anlegen einer Spannung an den nichtlinearen Kristall zu ermöglichen.

7. System nach einem der vorangehenden Ansprüche, **dadurch gekennzeichnet, dass** der Mikrochip-Hohlraum ein externer Hohlraum ist, der ein Fabry-Perot-Interferometer bildet.

8. System nach einem der Ansprüche 1-6, **dadurch gekennzeichnet, dass** der Mikrochip-Hohlraum ein externer Hohlraum in Ringform ist.

9. System nach einem der Ansprüche 1-6, **dadurch gekennzeichnet, dass** der Mikrochip-Hohlraum ein ein Interferometer bildender externer Hohlraum ist, dessen Reflektivität bei Resonanz maximal ist.

10. System nach einem der vorangehenden Ansprüche, **dadurch gekennzeichnet, dass** der Werkstoff, auf dem der Hohlspiegel aufliegt, aus Glas oder Kristall besteht, mit einem thermischen Ausdehnungskoeffizienten und einem thermo-optischen Koeffizienten, die kleiner sind als die des Werkstoffs, aus dem der nichtlineare Kristall besteht; sowie einer Hygroskopie, die kleiner ist als die des Werkstoffs, aus dem der nichtlineare Kristall besteht.

11. System nach einem der vorangehenden Ansprüche, **dadurch gekennzeichnet, dass** der Werkstoff, auf dem der Hohlspiegel aufliegt, Silizium, Quarzglas oder Saphir umfasst.

12. System nach einem der vorangehenden Ansprüche, **dadurch gekennzeichnet, dass** der nichtlineare Kristall und der Werkstoff, auf dem der Hohlspiegel aufliegt, durch molekulare Adhäsion oder durch eine auf einem Sol-Gel-Verfahren beruhende Klebung zusammengefügt sind.

13. System nach einem der vorangehenden Ansprüche, **dadurch gekennzeichnet, dass** der Eingangsspiegel direkt auf dem Werkstoff aufliegt, aus dem der nichtlineare Kristall besteht, oder aber auf einem Werkstoff aufliegt, der sich von dem Werkstoff unterschiedet, aus dem der nichtlineare Kristall besteht.

## Claims

1. A system for generating a laser beam by nonlinear effect, comprising:
- a single-frequency continuous-wave laser source for generating a fundamental wave,
- a resonant external cavity receiving this fundamental wave, called the microchip cavity,
**characterized in that** said microchip cavity is composite in so far as this microchip cavity is a unitary assembly of a plurality of materials comprising:
- at least one nonlinear crystal (5),
- an entrance mirror (4a),
- a concave mirror (6a) deposited on a material (6) that is fastened to the nonlinear crystal; the material on which the concave mirror is deposited is different from the constituent material of the nonlinear crystal,
- a first thermoelectric module (P2) for controlling the temperature of the nonlinear crystal and at least one second thermoelectric module (P1) for controlling at least the temperature of the material on which the concave mirror is deposited.

2. The system as claimed in claim 1, **characterized in that** it comprises a processing unit configured to servocontrol the temperature of the nonlinear crystal and the temperature at least of the material on which the concave mirror is deposited to the frequency of the laser source.

3. The system as claimed in claim 2, **characterized in that** the processing unit is configured to lock the temperature servocontrol only to at least one side of the resonant curve.

4. The system as claimed in any one of the preceding claims, **characterized in that** it comprises a processing unit configured to carry out a servocontrol using any physical effect that modifies the frequency of the emitting laser beam or the phase of the fundamental wave in the external cavity and that is rapider than the thermal one.

5. The system as claimed in any one of the preceding claims, **characterized in that** the processing unit is configured to servocontrol the phase of the fundamental wave in the external cavity by modifying the frequency of the single-frequency continuous-wave laser source.

6. The system as claimed in any one of the preceding claims, **characterized in that** when the nonlinear crystal is an electro-optic crystal, the processing unit is configured to carry out an electro-optic servocontrol by applying a voltage directly to the nonlinear crystal.

7. The system as claimed in any one of the preceding claims, **characterized in that** the microchip cavity is an external cavity forming a Fabry-Perot interferometer.

8. The system as claimed in any one of claims 1 to 6, **characterized in that** the microchip cavity is an external ring cavity.

9. The system as claimed in any one of claims 1 to 6, **characterized in that** the microchip cavity is an external cavity forming an interferometer the reflectivity of which is maximum during resonance.

10. The system as claimed in any one of the preceding claims, **characterized in that** the material on which the concave mirror is deposited is a glass or crystal, with a thermal expansion coefficient and thermo-optic coefficients respectively lower than those of the constituent material of the nonlinear crystal and a hygroscopicity lower than that of the constituent material of the nonlinear crystal.

11. The system as claimed in any one of the preceding claims, **characterized in that** the material on which the concave mirror is deposited comprises silica or fused silica or sapphire.

12. The system as claimed in any one of the preceding claims, **characterized in that** the nonlinear crystal and the material on which the concave mirror is deposited are assembled by direct bonding or by bonding using a sol-gel process.

13. The system as claimed in any one of the preceding claims, **characterized in that** the entrance mirror is deposited directly on the constituent material of the nonlinear crystal or indeed on another material different from that of the nonlinear crystal.
